# EUROPEAN PATENT SPECIFICATION

(11) **EP 2 724 868 B1**
(45) Date of publication and mention of the grant of the patent: **25.05.2016**
(21) Application number: 13186466.2
(22) Date of filing: 27.09.2013
(51) Int. Cl.: B41J 2/235, B42C 9/00, B42D 3/00, B65D 83/08, C09J 7/02, B41M 5/42

(54) **Bookbinding tape cassette and bookbinding sheet**
Buchbindebandkassette und Buchbindefolie
Cassette à bande de reliure et feuille de reliure

(30) Priority: 26.10.2012 JP 2012236738; 26.10.2012 JP 2012236739
(43) Date of publication of application: 30.04.2014
(73) Proprietor: Brother Kogyo Kabushiki Kaisha, Nagoya-shi, Aichi 467-8561 (JP)
(72) Inventor: Matsumoto, Haruki, Nagoya-shi, Aichi 467-8561 (JP)
(74) Representative: Prüfer & Partner mbB Patentanwälte · Rechtsanwälte

(56) References cited:
- WO-A2-2007/111826
- DE-U1-202006 004 781
- US-B1- 6 376 038

## Description

### TECHNICAL FIELD

The present invention relates to a bookbinding tape cassette which can produce a bookbinding tape used for bookbinding and a bookbinding sheet used for this.

### BACKGROUND ART

A bookbinding tape in which a hot-melt adhesive layer that melts by heating and exerts adhesiveness is provided on one side surface of a tape-shaped base material has been already known (See JP, A, 08-239157, for example). After being mounted so as to wrap end portions of paper sheets of a plurality of pages to be bound, for example, this bookbinding tape is heated to a temperature of a melting point or more at which the hot melt adhesive layer melts. As a result, by means of adhesiveness of the hot melt adhesive layer exerted by melting, the bookbinding tape fixes the paper sheets of the plurality of pages as a spine.

In this prior art, during manufacture of the bookbinding tape, the base material is fed out of a roll around which a tape-shaped base material (tape base material) is wound and horizontally fed. On an upper part of a feeding path of the base material, a liquid-state hot melt adhesive is injected from a nozzle. As a result, the hot melt adhesive is applied to the base material being fed horizontally, and then by being cooled, a hot melt adhesive layer is formed on a base layer.

### DISCLOSURE OF THE INVENTION

### Problem to be solved by the Invention

However, the aforementioned prior art is a method of simply applying the hot melt adhesive from above to the base material being fed. As a result, generation of irregularity on the surface of the hot melt adhesive layer to be formed on the base layer cannot be avoided, and it has been difficult to smoothen the surface of the hot melt adhesive layer. As a result, if a bookbinding tape is to be fed in an appropriate processor for executing bookbinding processing or preparation processing for that, for example, smooth feeding might become difficult due to presence of the irregularity on the surface of the hot melt adhesive layer. Moreover, if print formation is to be performed on the side opposite to the hot melt adhesive layer of the base material in the processor, for example, it is concerned that blur or the like occurs due to presence of the irregularity and a print quality might deteriorate.
WO 2007/111826 A2 discloses a bookbinding tape cassette according to the preamble of claim 1 and a bookbinding sheet according to the preamble of claim 9.

The present invention has an object to provide a bookbinding tape cassette and a bookbinding sheet used for that which can easily perform smooth feeding during manufacture and can perform print formation with a favorable quality.

This object is achieved by the bookbinding tape cassette having the features of claim 1 and by a bookbinding sheet having the features of claim 9. The present invention is further developed as defined in the dependent claims.

According to a first aspect, there is provided a bookbinding tape cassette comprising a bookbinding tape roll that winds a bookbinding tape having a dimension in a thickness direction around an outer periphery of a winding member provided with a predetermined axis, the bookbinding tape including a base layer and a hot melt adhesive layer that is provided on one side from the base layer in the thickness direction, the hot melt adhesive layer being formed of a hot melt adhesive applied so that a surface of the hot melt adhesive layer on the one side in the thickness direction becomes smooth, the hot melt adhesive being configured to melt at a temperature of a predetermined melting point or more so as to exert adhesiveness, a guide shaft for guiding the bookbinding tape fed out of the bookbinding tape roll, and a housing configured to accommodate the bookbinding tape roll and the guide shaft therein, the bookbinding tape fed out of the bookbinding tape roll being able to be continuously supplied to an outside of the housing.

The bookbinding tape supplied by the bookbinding tape cassette of the present invention is used during bookbinding processing. The bookbinding tape is mounted so as to wrap end portions of paper sheets of a plurality of pages to be bound, for example, and fixes the paper sheets of the plurality of pages as a spine. Thus, the bookbinding tape of the bookbinding tape cassette of the present invention is provided with a hot melt adhesive layer. Since the hot melt melts at a temperature of a predetermined melting point or more and can exert adhesiveness, it is possible to fix the paper sheets of the plurality of pages by the adhesiveness by raising the temperature to the melting point or more during bookbinding.

At this time, the bookbinding tape in the present invention has a laminated structure in which a base layer and a holt melt adhesive layer are included in this order in a thickness direction and an adhesive is applied so that the surface of the hot melt adhesive layer (the surface on the side opposite to the base layer) is smooth. The bookbinding tape including the hot melt adhesive layer whose surface is smooth is supplied to the outside of the cassette. As a result, when the bookbinding tape is fed in an appropriate processor in which the bookbinding tape cassette is attached for executing bookbinding processing, preparation processing for that and the like, the tape can be fed more easily and smoothly than in a case in which the surface of the hot melt adhesive layer is irregular. Moreover, when print formation is to be performed on the base material (the surface on the side opposite to the hot melt adhesive layer) in the processor, for example, print without blur or the like caused by the irregularity but having a favorable quality can be formed.

Further, in order to achieve the above-described object, according to a second aspect, there is provided a bookbinding sheet having a dimension in a thickness direction, comprising a base layer, a hot melt adhesive layer that is provided on one side from the base layer in the thickness direction, the hot melt adhesive layer being applied smoothly on the base layer or an apply-receiving material layer provided adjacently on the one side of the base layer in the thickness direction and being configured to melt at a tem perature of a predetermined melting point or more so as to exert adhesiveness, and a print-receiving area provided adjacently on the other side of the base layer in the thickness direction and capable of print formation by thermal transfer from an ink ribbon.

The bookbinding sheet of the present invention is used for bookbinding. It is mounted so as to wrap the end portions of the paper sheets of the plurality of pages to be bound, for example, and fixes the paper sheets of the plurality of pages as a spine. Thus, the bookbinding sheet of the present invention is provided with the hot melt adhesive layer. Since the hot melt melts at a temperature of a predetermined melting point or more and can exert adhesiveness, it is possible to fix the paper sheets of the plurality of pages by the adhesiveness by raising the temperature to the melting point or more during the bookbinding. At this time, a print-receiving area is provided on the side opposite to the hot melt of the base layer. As a result, by forming a desired print on the side opposite to the side to which the paper sheets are fixed, it is possible to display desired descriptions (title, manufacturer (author), date and the like).

In the bookbinding sheet of the present invention, the hot melt adhesive layer is formed so that the surface of the base layer (or a material to be applied provided adjacently to the base layer) becomes smooth. Therefore, when the base layer provided with the hot melt adhesive layer is to be fed in an appropriate processor for executing bookbinding processing, preparation processing for that and the like, the base layer can be fed more easily and smoothly than in a case in which the surface of the hot melt adhesive layer is irregular. Moreover, if print formation is to be performed on the print-receiving area by thermal transfer from an ink ribbon in the processor, a print without blur or the like but having a favorable quality can be formed.

### Advantages of the Invention

According to the present invention, smooth feeding can be performed easily during manufacture and print formation can be performed with a favorable quality.

### BRIEF DESCRIPTION OF THE DRAWING

Fig. 1 is a conceptual side view illustrating a configuration example of a roll manufacturing apparatus for manufacturing a print tape roll according to an embodiment of the present invention.
Fig. 2 is a perspective view illustrating a printing device for forming a print on a print receiving tape and creating a sheet for spine.
Fig. 3 is a perspective view illustrating a tape cassette attaching portion of the printing device.
Fig. 4 is a plan view illustrating an internal structure of a tape cassette.
Fig. 5A is a plan view illustrating an example of a spine sheet.
Fig. 5B is an A-A' sectional view of Fig. 5A.
Fig. 6 is a conceptual side view for explaining a configuration and an operation example of a bookbinding device.
Fig. 7 is a conceptual side view for explaining the configuration and operation example of the bookbinding device.
Fig. 8 is a conceptual side view for explaining the configuration and operation example of the bookbinding device.
Fig. 9 is a conceptual side view illustrating a finished bookbinding product of paper sheets.
Fig. 10A is a sectional view of a print-receiving tape according to a first embodiment.
Fig. 10B is a sectional view of a print-receiving tape according to a variation provided with a four-layer laminated structure.
Fig. 10C is a sectional view of a print-receiving tape according to a variation provided with a four-layer laminated structure.
Fig. 11A is an explanatory diagram illustrating an outline of a manufacturing method of a print-receiving tape in a second embodiment of the present invention.
Fig. 11B is an explanatory diagram illustrating an outline of the manufacturing method of the print-receiving tape, following Fig. 11A.
Fig. 11C is an explanatory diagram illustrating an outline of the manufacturing method of the print-receiving tape, following Fig. 11B.
Fig. 11D is an explanatory diagram illustrating an outline of the manufacturing method of the print-receiving tape, following Fig. 11C.
Fig. 12 is a conceptual side view illustrating a configuration example of a roll manufacturing apparatus for realizing processing on a first half of the method in Figs. 11A to 11D.
Fig. 13 is an explanatory diagram of a discharge nozzle corresponding to an arrow view from a B direction in Fig. 12.
Fig. 14 is a conceptual side view illustrating a configuration example of the roll manufacturing apparatus for realizing processing on a second half of the method in Figs. 11A to 11D.
Fig. 15 is a conceptual plan view for explaining cutting by a slitter device.

### BEST MODE FOR CARRYING OUT THE INVENTION

Embodiments of the present invention will be described below by referring to the attached drawings.

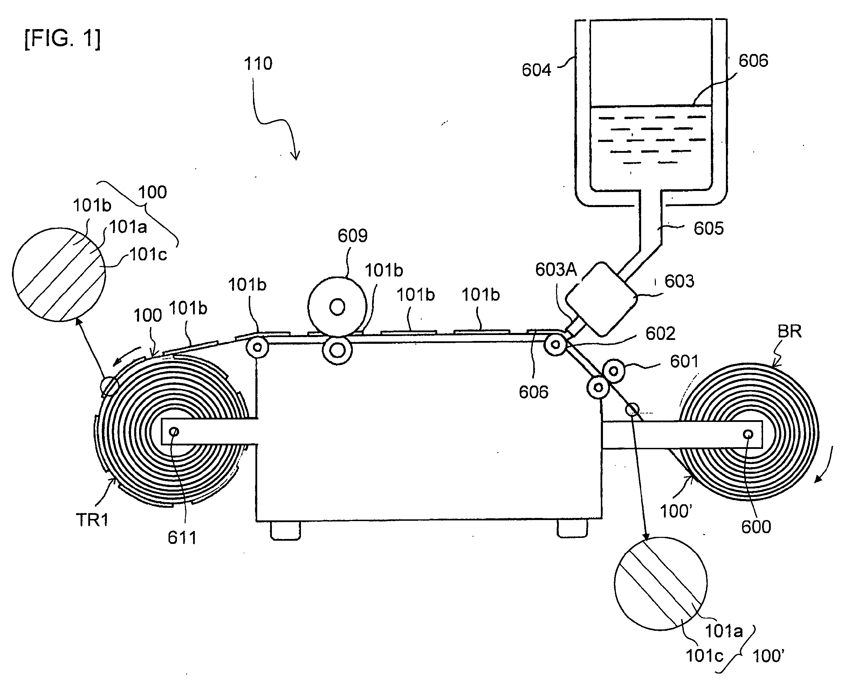

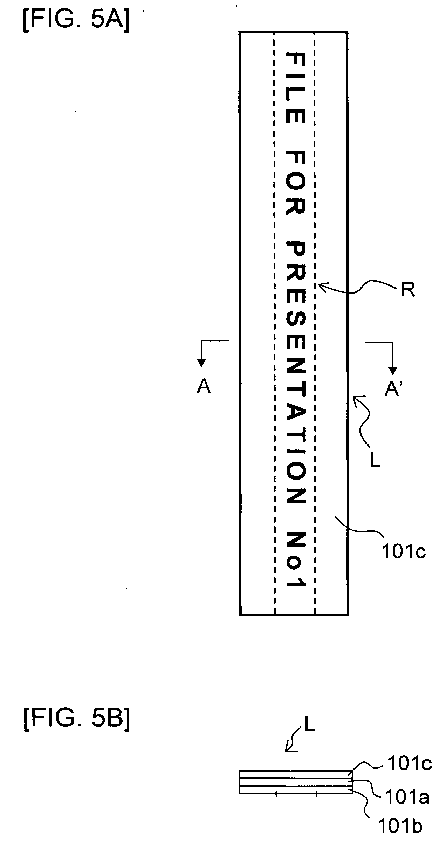

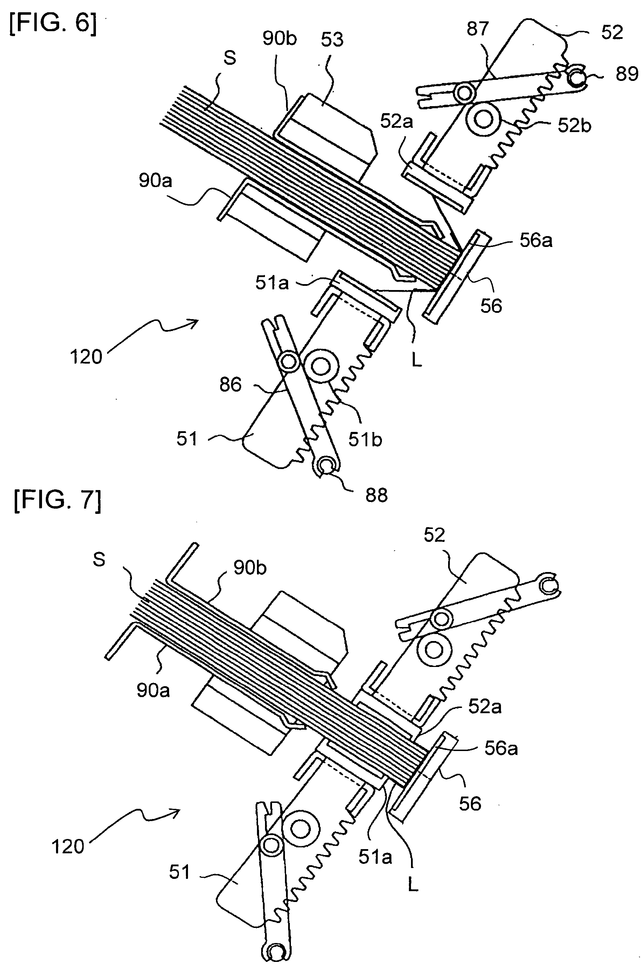

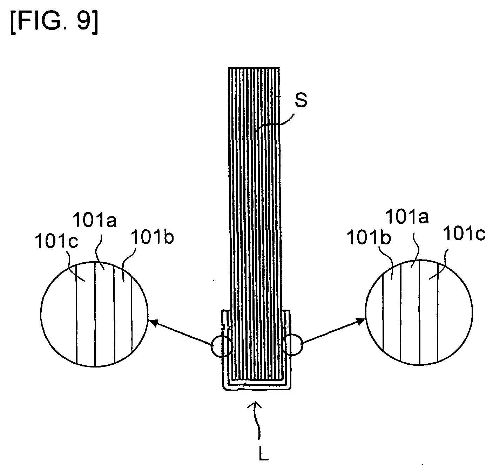

First, a first embodiment of the present invention will be described by referring to Figs. 1 to 9. In the first embodiment, by using a bookbinding tape, a spine sheet L (See Figs. 5 and 9 which will be described later) functioning as a binder tape during binding is produced. That is, the spine sheet L is mounted so as to wrap end portions of paper sheets S of a plurality of pages to be bound (See Figs. 6 to 9 and the like which will be described later), and whereby the paper sheets S of the plurality of pages are fixed as a spine.

### <Configuration of roll manufacturing device>

Fig. 1 illustrates a configuration example of a roll manufacturing device 110 (corresponding to one example of a processor) for manufacturing a tape roll TR1 for print used for producing the above described spine sheet L.

In the roll manufacturing device 110 illustrated in Fig. 1, a tape base material roll BR (it should be a spiral state but illustrated as a concentric circle for simplification) around which a material tape 100' is wound is rotatably supported by a pivot shaft 600. The material tape 100' is provided with a base layer 101 a formed of an appropriate material (a paper material in this example) and a transfer-receiving layer 101c (corresponding to a print-receiving area) made of a polyester resin, for example, and provided adjacently to this base layer 101a outside in a radial direction of the tape base material roll BR (corresponding to the other side in a thickness direction). As the paper material forming the base layer 101a, so-called fine quality paper, dustless paper, glassine paper, clay coated paper, resin coated paper, Yupo paper (synthetic paper), craft paper and the like can be cited. The material tape 100' fed out of the tape base material roll BR is fed to a feeding roller 602 through a supply roller pair 601.

Here, above a feeding path of the above described material tape 100', a discharge nozzle 603A of a fixed-amount discharging device 603 is provided. To the fixed-amount discharging device 603, a hot melt adhesive 606 in a melted liquid state in a hopper 604 with built-in heater is supplied through a feeding path 605. This hot melt adhesive 606 melts at a temperature of a predetermined melting point or more and can exert adhesiveness. As an example of this hot melt adhesive 606, an adhesive having a melting viscosity of 10000 mPa·S or less when the melting point is 150°C is suitably used.

Specifically, as the hot melt adhesive 606, those containing the following A component to E component at a predetermined ratio are used:
A component: base polymer
B component: wax
C component: adhesion imparting resin
D component: antioxidant
E component: coloring agent

An example of each component is as follows, for example:

### <A component: base polymer>

### (ethylene copolymer)

Ethylene-vinyl acetate copolymer (EVA), ethylene-ethyl acrylate copolymer (EEA), ethylene-methyl acrylate copolymer (EMA), ethylene-methacrylic acid copolymer (EMMA), ethylene-acrylic acid copolymer (EAA), ethylene normal butyl acrylate (EnBA) and the like.

### (rubber)

natural rubber and the like.

### (synthetic rubber)

Styrene-butadiene-styrene copolymer (SBS), styrene-isoprene-styrene copolymer (SIS), styrene-ethylene-butylene-styrene copolymer (SEBS), styrene-butadiene-butylene-styrene copolymer (SBBS) and the like.

One type of the above described base polymer may be used singularly or two types or more may be used in combination.

### <B component: wax>

### (petroleum wax>

Paraffin wax, micro wax and the like.

### (synthetic wax)

Polyethylene wax, polypropylene wax and the like.

One type of the above described wax may be used singularly or two types or more may be used in combination.

### <C component: adhesion imparting resin>

Rosin based resin (rosin, rosin ester and the like: natural rosin, modified rosin, hydrogenated rosin), terpene resin, petroleum resin, cumarone resin, styrene resin, phenol resin and the like

One type of the above described adhesion imparting resin may be used singularly or two types or more may be used in combination.

<D component: antioxidant>

Phenol antioxidant, hindered phenol antioxidant, thio-ether antioxidant, phosphite antioxidant, tocopherol-based antioxidant, bisbenzotriazole-based antioxidant, thiophenyl bisbenzoxazole derivative-based antioxidant, benzophenone-based antioxidant and the like.

One type of the above described antioxidant may be used singularly or two types or more may be used in combination.

### <E component: coloring agent>

### Titanium oxide and the like

When the material tape 100' passes through the feeding roller 602, the liquid-state hot melt adhesive 606 is discharged from the discharging nozzle 603A of the fixed-amount discharging device 603 by a fixed amount. This discharged hot melt adhesive 606 is applied on the upper side of the material tape 100', and a hot melt adhesive layer 101b is sequentially formed on the upper side (corresponding to the one side in the thickness direction) of the above described base layer 101a of the material tape 100'. As a result, a print-receiving tape 100 provided with the above described hot melt adhesive layer 101b, the above described base layer 101a, and the above described transfer-receiving layer 101c is formed from the one side to the other side (inside in the radial direction of the tape roll TR1 for print which will be described later) in the thickness direction.

At this time, in the present embodiment, the fixed-amount discharging device 603 is provided with a function of suctioning the hot melt adhesive 606 in a stringy state from the discharge nozzle 603A after a valve is closed, for example. As a result, edge accuracy, volume accuracy, and dimensional accuracy of the hot melt adhesive layer 101b applied on the above described base layer 101a can be obtained with high accuracy. As a result, the hot melt adhesive layer 101b can be smoothly applied on the above described base layer 101a. The dimension in the thickness direction of the hot melt adhesive layer 101b at this time is smaller than the dimension in the thickness direction of the above described base layer 101 a and is 100 µm or more and 500 µm or less, for example. The dimension in the thickness direction of the hot melt adhesive layer 101b is preferably 200 µm or more and 400 µm or less and more preferably 250 µm or more and 350 µm or less. Regarding a degree of smoothness, surface roughness of the hot melt adhesive layer 101b with an upper limit value of 16% and a lower limit value of 16% is found to have a favorable result both in feeding performance and print quality. That is, variation in the case of application thickness of 200 µm is favorable within a range of 232 to 168 µm and in the case of application thickness of 400 µm, it is favorable within a range of 464 to 336 µm. In the case of the upper limit value 10% and the lower limit value 10%, both the feeding performance and print quality are more favorable.

The print-receiving tape 100 (corresponding to a bookbinding sheet and a bookbinding tape) in which the smooth hot melt adhesive layer 101b is formed as described above is fed in a substantially horizontal direction and introduced into an unnecessary-part removing device 609. In this unnecessary-part removing device 609, the print-receiving tape 100 has an appropriate unnecessary part located on both end portions in the width direction cut and removed and then, is taken up as the tape roll TR1 for print rotatably supported on a take-up shaft 611.

### <Configuration of printing device>

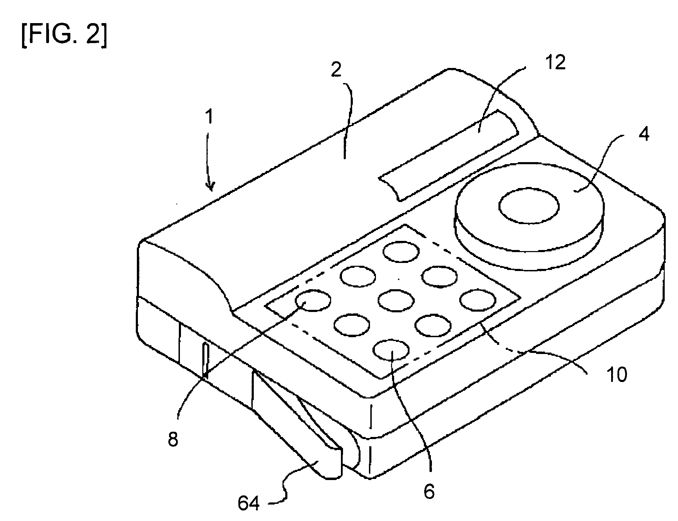

Fig. 2 illustrates a printing device 1 (corresponding to an example of a processor) for producing the above described spine sheet L by applying print on the print-receiving tape 100 by using the above described tape roll TR1 for print. In the printing device 1 illustrated in Fig. 2, a dial 4 for character input and capable of movable operation is provided on an upper surface of its main body 2. Adjacently to this dial 4 for character input, a function key 10 for various types of control of the printing device 1 such as a power switch 6 and a print key 8 and a liquid crystal display (LCD) 12 for displaying inputted characters, symbols and the like are provided.

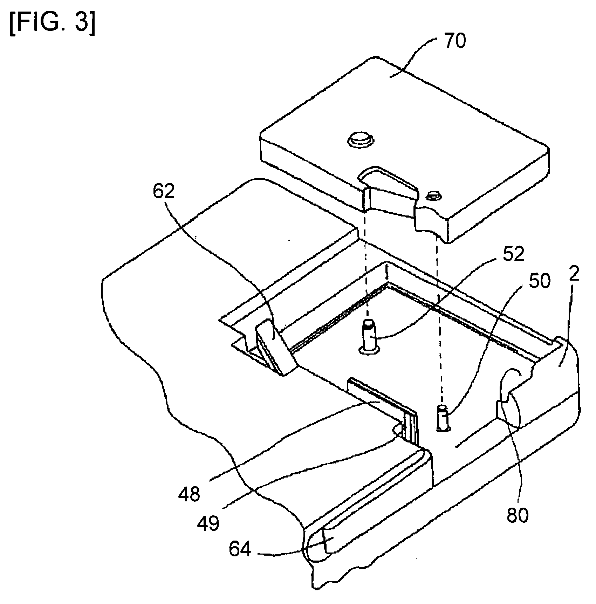

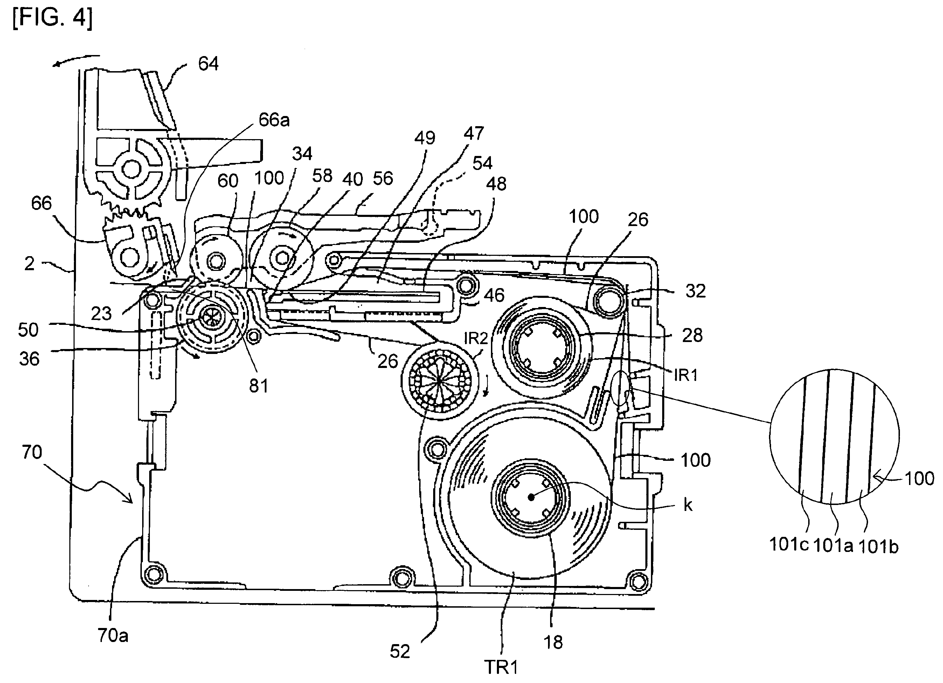

On the back surface of the main body 2, as illustrated in Figs. 3 and 4, a cassette holder 80 is provided, and a tape cassette 70 (corresponding to a bookbinding tape cassette) can be detachably attached to this cassette holder 80. Moreover, in the main body 2, a feeding driving shaft 50 fitted with a feeding roller 36 in the tape cassette 70 when a cartridge housing 70a (corresponding to a housing) of the tape cassette 70 is attached to the cassette holder 80 and a ribbon take-up spool shaft 52 fitted with a ribbon take-up roll IR2 in the tape cassette 70 are provided and driven by a pulse motor, not shown.

As illustrated in Fig. 4, in the cartridge housing 70a of the tape cassette 70, a print spool 18 (corresponding to a winding member) is provided rotatably around an axis k. On an outer periphery of the print spool 18, the tape roll TR1 for bookbinding around which the above described print-receiving tape 100 is wound with the hot melt adhesive layer 101b faced outside is formed (it should be a spiral state but illustrated as a concentric circle for simplification). The print-receiving tape 100 has a three-layer laminated structure in which the hot melt adhesive layer 101b is provided on one side in the thickness direction of the base layer 101a as described above, and the transfer-receiving layer 101c is provided on the other side in the thickness direction of the base layer 101 a.

On a roller holder 56 supported swingably by a swing shaft 54 fixed to the main body 2, a movable platen roller 58 and a driving roller 60 are rotatably held. When a roller release lever 62 (See Fig. 3) for allowing the roller holder 56 to swing around the swing shaft 54 is operated, the movable platen roller 58 and the driving roller 60 enter through a roller entry port 34. During the entry, the print-receiving tape 100 exposed to the roller entry port 34 portion and an ink ribbon 26 are overlapped with each other and sandwiched between the movable platen roller 58 and heat generating elements 49 of a thermal head 48. On the other hand, on its downstream, the print-receiving tape 100 is sandwiched between the driving roller 60 and the feeding roller 36.

When the above described feeding roller 36 (corresponding to a feeding roller) is driven in a state described as above, the print-receiving tape 100 is fed to the roller entry port 34 through a guide shaft 32 from the tape spool 18 for print and moreover, discharged to the outside of the cartridge housing 70a by passing through a slit below a tape presser 23.

At this time, the ink ribbon 26 formed by applying hot-melt ink on a base film is wound around a ribbon supply spool 28 with the ink surface inside so as to form a ribbon supply roll IR1. The ink ribbon 26 passes between the print-receiving tape 100 and the guide shaft 32 from the ribbon supply spool 28 and is overlapped with the print-receiving tape 100. Here, a thermal head insertion hole 47 surrounded by the ink ribbon 26 and a peripheral wall portion 46 is opened in the depth of the roller entry port 34. Into this thermal head insertion hole 47, the thermal head 48 mounted on the main body 2 is inserted. At a distal end of the thermal head 48, the heat generating elements 49 are aligned in a single row orthogonal to a feeding direction of the ink ribbon 26. The above described transfer-receiving layer 101c of the print-receiving tape 100 is formed of a material to be transferred, and print is formed on the transfer-receiving layer 101c by thermal transfer from the ink ribbon 26 by being heated by the heat generating elements 49 of the thermal head 48 in the above described overlapped state. The melting point during the above described thermal transfer of the ink ribbon 26 is higher than 150°C and 200°C or less, for example (or preferably 160°C or more and 200°C or less). After the print is formed by transfer, the ink ribbon 26 reaches the roller entry port 34, rotates its traveling direction by approximately 180° through a separation plate 40 and is taken up by the ribbon take-up roll IR2. The separation plate 40 is fixed at a position separated by a predetermined quantity on the downstream side in the traveling direction of the ink ribbon 26 from the heat generating elements 49 of the thermal head 48 which will be described later and separates the ink ribbon 26 from the print-receiving tape 100.

Moreover, on the downstream of the above described driving roller 60, a cutting lever 64 and a rotating cutter 66 rotating in conjunction with swing of the cutting lever 64 are provided. Moreover, a cutting-blade receiving portion 81 having a flat plate shape and receiving a cutting blade 66a of the rotating cutter 66 is provided in the tape cassette 70.

### <Operation of printing device>

In the printing device 1 having the above described configuration, desired characters and symbols are operationally inputted through the dial 4 for character input and the functional key group 10 by an operator, and the print key 8 is pressed. Then, while the print-receiving tape 100 and the ink ribbon 26 are fed at a predetermined speed, the heat generating elements 49 of the thermal head 48 generate heat on the basis of data such as the inputted characters and symbols. As a result, after the characters, symbols and the like are printed on the transfer-receiving layer 101c of the print-receiving tape 100, it is discharged to the outside of the printing device 1 by the driving roller 60. Subsequently, by means of the operation of the cutting lever 64 by the operator, the rotating cutter 66 rotates in an arrow direction in Fig. 4, the print-receiving tape 100 is cut by being pressed onto the cutting-blade receiving portion 81 by the cutting blade 66a, and whereby the spine sheet L is created.

### <Spine sheet>

An example of the spine sheet L created as above is illustrated in Figs. 5A and 5B. The spine sheet L created by using the print-receiving tape 100 as above is provided with the above described base layer 101a, the hot melt adhesive layer 101b, and the transfer-receiving layer 101c. Since the hot melt adhesive layer 101b melts at a temperature of a predetermined melting point or more and can exert adhesiveness, by using the temperature of the melting point or more, the paper sheets of the plurality of pages can be fixed by the adhesiveness during the above described bookbinding (details of a bookbinding procedure will be described later). Moreover, as illustrated in Fig. 5B, the above described transfer-receiving layer 101c is provided on the side opposite to the hot melt adhesive layer 101b of the base layer 101a. As a result, by forming a desired print R (a text such as "file for presentation No. 1" or the like, for example, in Fig. 5A) on the side opposite to the side where the paper sheets are to be fixed, it is possible to display desired description (a title, a manufacturer or an author, date and the like, for example).

### <Bookbinding procedure>

Subsequently, a bookbinding procedure using the spine sheet L produced as above will be described by using Figs. 6 to 9. In the present embodiment, bookbinding is performed by a bookbinding device 120 provided with a bottom-portion heater 56.

In the bookbinding device 120 illustrated in Fig. 6, a clamping member 53 and a bottom-portion heater 56 are provided. The bottom-portion heater 56 has a rear-surface heater 56a for heating the spine sheet L. On the both sides of the bottom-portion heater 56, side-portion heaters 51 and 52 are provided. The side-portion heaters 51 and 52 have heaters 51a and 52a and rollers 51b and 52b, respectively. Moreover, in the vicinity of the side-portion heaters 51 and 52, tape guides 86 and 87 are disposed, respectively, and these tape guides 86 and 87 are configured rotatable around support shafts 88 and 89 whose base portions are fixed.

First, the paper sheets S to be bound are clamped by the clamping member 53 in a thickness direction (upper right to lower left direction in Fig. 6) while being guided by regulating guides 90a and 90b and bundled. At this time, the above described spine sheet L is folded into a substantial V-shape with the above described hot melt adhesive layer 101b side on the inner side and held by the bottom-portion heater 56. The clamping member 53 having clamped the paper sheets S linearly moves to the lower right side in Fig. 6 along a planar direction of the spine sheet L, and whereby an end portion on the rear surface side (lower right end in Fig. 6) of the paper sheets S is brought into contact with the above described substantially V-shaped above described spine sheet L (the state in Fig. 6). When the paper sheets S are brought into contact with the spine sheet L, heating by the rear-surface heater 56a of the bottom-portion heater 56 is started. As a result, the above described hot melt adhesive layer 101b of the spine sheet L is melted, and binding on the above described end portion on the rear surface side of the paper sheets S is executed.

When the rear-surface binding of the paper sheets S is completed, as illustrated in Fig. 6, the side-portion heaters 51 and 52 move to the spine sheet L side so as to lift up the both end portions each having the above described V-shape of the spine sheet L. Moreover, heating by the heaters 51 a and 52a of the side-portion heaters 51 and 52 is started. As a result, since the above described hot melt adhesive layer 101b is melted while the above described rear-surface side end portion of the paper sheets S is pressed through the spine sheet L, binding on the side surfaces is started. At this time, the regulating guides 86 and 87 retreat in a direction away from the spine sheet L with the above described movement of the side-portion heaters 51 and 52. As illustrated in Fig. 7, the side-portion heaters 51 and 52 are brought into close contact with the spine sheet L by the movement, and binding of the side surfaces of the spine sheet L is completed.

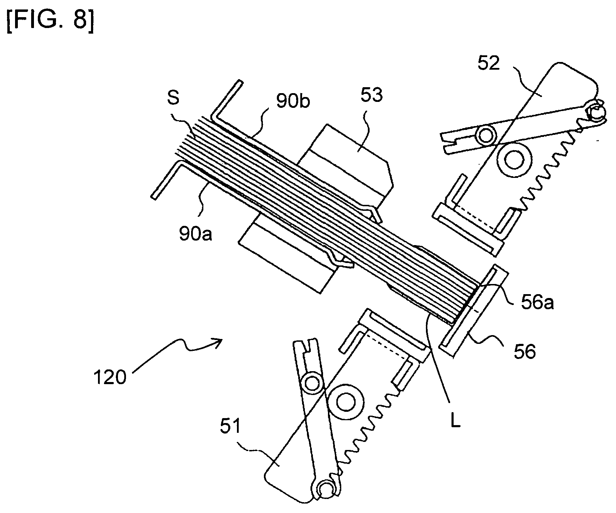

Then, as illustrated in Fig. 8, the side-portion heaters 51 and 52 move in a direction separating away from the spine sheet L, and whereby pressurization by the side-portion heaters 51 and 52 is released. As a result, a finished bookbinding product of the paper sheets S illustrated in Fig. 9 is completed.

### <Advantages of first embodiment>

As described above, the print-receiving tape 100 of the present embodiment is provided with the hot melt adhesive layer 101b which melts at a temperature of a predetermined melting point or more and can exert adhesiveness. As a result, during bookbinding, the spine sheet L produced by the print-receiving tape 100 can fix the paper sheets S by wrapping the end portions of the paper sheets S of the plurality of pages and then, heating them at a temperature of the above described melting point or more. A desired print R is formed on the transfer-receiving layer 101c provided on the side opposite to the hot melt adhesive layer 101b of the base layer 101a, and desired descriptions can be displayed.

In the print-receiving tape 100, the hot melt adhesive layer 101b is formed on the base layer 101a as described above so that the surface becomes smooth. Therefore, when the base layer 101 a provided with the hot melt adhesive layer 101b is fed in the roll manufacturing device 110 or the printing device 1, it can be fed more easily and smoothly than a case in which the surface of the hot melt adhesive layer 101b is irregular. Moreover, when print formation is performed on the transfer-receiving layer 101c by thermal transfer from the ink ribbon 26 in the printing device 1, a favorable quality print can be formed without blur or the like.

Particularly, the ink ribbon 26 fed out of the ribbon supply roll IR1 of the tape cassette 70 is overlapped with the print-receiving tape 100 fed out of the tape roll TR1 for bookbinding, and a print is formed on the print-receiving tape 100 by thermal transfer of the ink from the ink ribbon 26. At this time, since the surface of the hot melt adhesive layer 101b is smooth as described above, the above described overlapping for the above described thermal transfer during print formation can be performed uniformly. As a result, the print quality can be reliably improved.

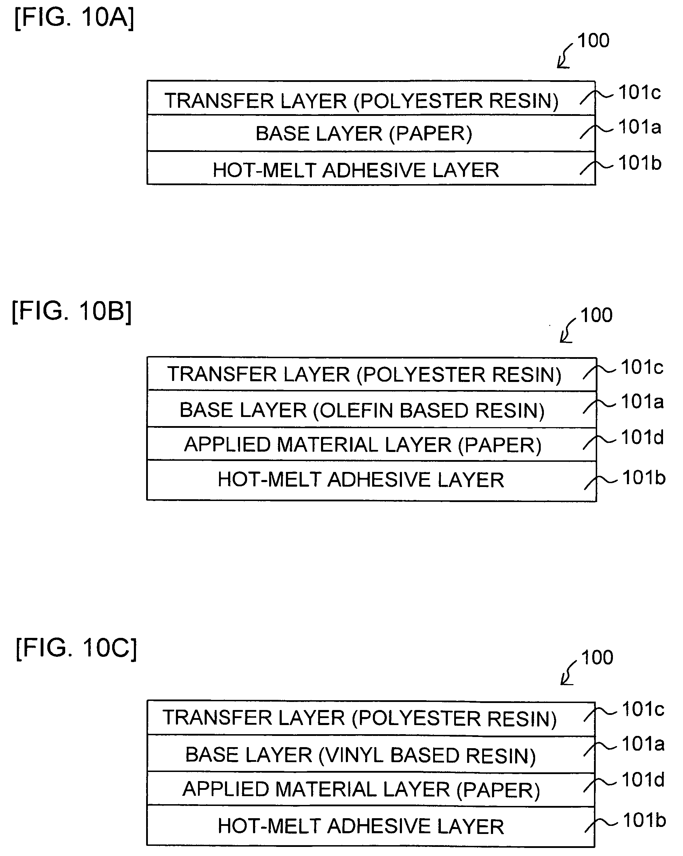

Moreover, particularly the present embodiment has, as illustrated in Fig. 10A and Fig. 4 described above, a three-layer laminated structure in which the transfer-receiving layer 101c is provided on the side opposite (upper side in the figure) to the hot melt adhesive layer 101b of the base layer 101a. By configuring such required minimum three-layer laminated structure, it is possible to reduce the dimension in the thickness direction of the print-receiving tape 100, and whereby to realize feeding more easily and smoothly.

Moreover, particularly in the present embodiment, as a melting viscosity condition at the melting point of the hot melt adhesive layer 101b, the melting viscosity when the melting point is 150°C, for example, is 10000 mPa·S or less. The melting point in thermal transfer of the ink ribbon 26 is set higher than 150°C and 200°C or less (preferably 160°C or more and 200°C or less). That is, the melting point of the ink ribbon 26 is higher than the melting point of the hot melt adhesive layer 101b (at which melting and adhesion can be performed). As a result, when the spine sheet L on which a print was formed by the ink ribbon 26 and which is subsequently cut and created in the above described printing device 1, is thereafter heated to exert adhesiveness of the hot melt, it is possible to prevent occurrence of stains, blur and the like caused by re-melting of the ink.

Moreover, particularly in the present embodiment, a dimensional range in the thickness direction of the hot melt adhesive layer 101b is 200 µm or more and 400 µm or less. As described above, by setting the thickness of the hot melt adhesive layer 101b sufficiently large to 200 µm or more, when the paper sheets S of the plurality of pages are to be fixed as the spine during the above described bookbinding, even if some irregularity is present on the end portion of each page, it is possible to reliably fix the paper sheets S of the plurality of pages (See Figs. 6 -9).

### <Variation of first embodiment>

In the above described embodiment, as illustrated in Fig. 10A, the hot melt adhesive layer 101b is provided on one side (lower side in the figure) in the above described thickness direction of the base layer 101a made of a paper material in the print-receiving tape 100, and the transfer-receiving layer 101c (made of a polyester resin) is provided on the other side (upper side in the figure) in the above described thickness direction of the base layer 101 a, but there can be other layer configurations.

That is, as illustrated in Fig. 10B, the above described transfer-receiving layer 101 c may be provided on the other side (upper side in the figure) in the above described thickness direction of the base layer 101a formed of an olefin based resin, for example, while an apply-receiving material layer 101d formed of a paper material or the like may be provided, for example, adjacently to the one side (lower side in the figure) in the above described thickness direction of the base layer 101a. In this case, a four-layer laminated structure is provided in which the hot melt adhesive layer 101b is further applied adjacently to the one side (lower side in the figure) in the thickness direction of the apply-receiving material layer 101d so that the surface becomes smooth.

As the olefin resin forming the base layer 101a, polyethylene (PE), polypropylene (PP) and the like can be used.

In the present variation, the print-receiving tape 100 incorporating the base layer 101a using the olefin based resin can be realized.

Moreover, as illustrated in Fig. 10C, the above described transfer-receiving layer 101c may be provided on the other side (upper side in the figure) in the above described thickness direction of the base layer 101a formed of a vinyl based resin, for example, while the apply-receiving material layer 101d formed of a paper material or the like similarly to the above may be provided adjacently to the one side (lower side in the figure) in the above described thickness direction of the base layer 101a. In this case, too, the four-layer laminated structure is provided in which the hot melt adhesive layer 101b is further applied on the one side (lower side in the figure) in the thickness direction of the apply-receiving material layer 101d so that the surface becomes smooth, similarly to the above.

As the vinyl based resin forming the base layer 101a, polyvinylchloride (PVC) and the like can be used.

In the present variation, the print-receiving tape 100 incorporating the base layer 101a using the vinyl based resin can be realized.

Moreover, in any of the configurations of the above described Figs. 10A to 10C, as the base layer 101a, polyethylene (PE), polypropylene (PP), ethylene-vinyl acetate copolymer (EVA), ethylene-methacrylic acid copolymer (EMMA), polybutene (PB), polybutadiene (BDR), polymethylpenten (PMP), polyethylene terephthalate (PET), polyethylene naphthalate (PEN), polybutylene terephthalate (PBT), polyimide (PI), polyether imide (PEI), polyether ketone (PEK), polyether ether ketone (PEEK), nylon (NY), polyamide (PA), polycarbonate (PC), polystyrene (PS), foam polystyrene (FS/EPS), polyvinylchloride (PVC), polyvinylidene chloride (PVDC), saponified ethylene-vinyl acetate copolymer (EVOH), polyvinyl alcohol (PVA), common cellophane (PT), moisture-proof cellophane (MST), polyacrylonitrile (PAN), vinylon (VL), polyurethane (PU), triacetyl cellulose (TAC), metal foil such as aluminum foil (AI), copper foil and the like, film (VM) (of aluminum or the like) by vacuum deposition, unwoven cloth, glass cloth and the like may be used. The similar advantages are obtained in these cases, too.

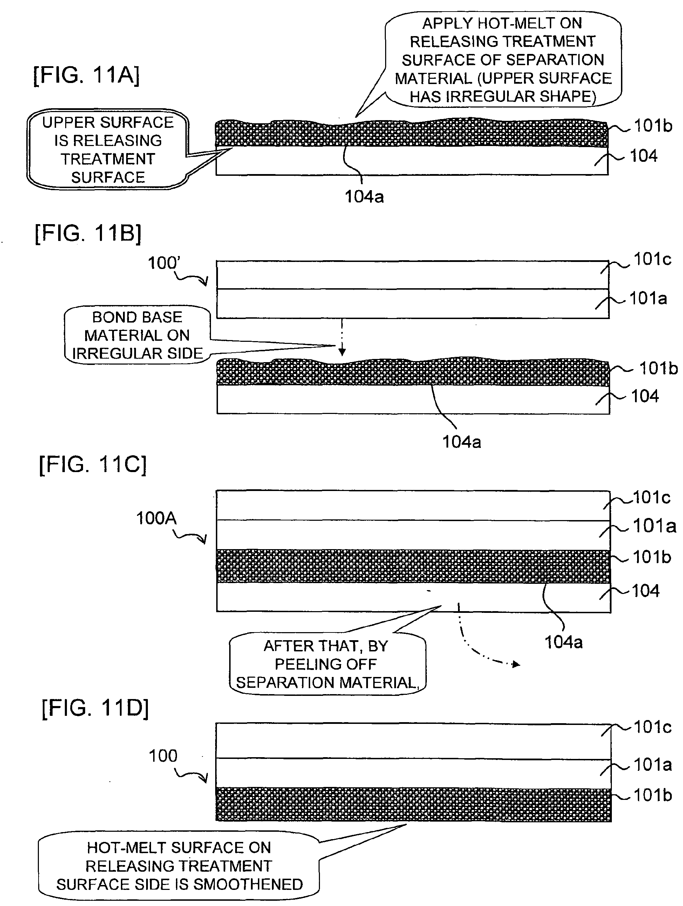

Subsequently, a second embodiment of the present invention will be described by referring to Figs. 11 to 15. In the present embodiment, the print-receiving tape 100 including the hot melt adhesive layer 101b is produced by a method different from that of the above described first embodiment. The same reference numerals are given to the equivalent portions to those in the above described first embodiment, and explanation will be omitted or simplified as appropriate.

An outline of a producing method (manufacturing method) of the print-receiving tape in the present embodiment will be described by referring to Figs. 11A to 11D. First, as illustrated in Fig. 11A, on the surface (upper surface) of a releasing treatment surface 104a of a separation material 104 (corresponding to a separation material layer) provided with a separable releasing treatment surface 104a, a hot melt which melts and can exert adhesiveness by melting at a temperature of a predetermined melting point or more is applied so as to form the hot melt adhesive layer 101b (corresponding to an application procedure). However, at this time, unlike the above described first embodiment, the dimensional accuracy or the like of the hot melt adhesive layer 101b does not have to be high but may be relatively low. Therefore, at this stage, the upper surface (the surface on the side opposite to the releasing treatment surface 104) of the hot melt adhesive layer 101b after application remains irregular, as illustrated.

Subsequently, as illustrated in Fig. 11B, the base layer 101a provided with the transfer-receiving layer 101c on the upper surface thereof (these two layers form the material tape 100') is pressed onto the separation material 104 so that the surface (on the irregular side) of the hot melt adhesive layer 101 b is brought into close contact with the surface (lower surface) of the base layer 101a, and the hot melt adhesive layer 101b is transferred to the base layer 101a (corresponding to a transfer procedure). In an intermediate tape 100A obtained in this state, a four-layer laminated structure is provided in which the separation material 104, the above described hot melt adhesive layer 101b, the base layer 101a, and the transfer-receiving layer 101c are adjacently laminated in this order from the one side (lower side in Figs. 11A to 11D) in the thickness direction to the other side (upper side in Figs. 11A to 11D) in the thickness direction.

Subsequently, as illustrated in Fig. 11C, the separation material 104 is peeled off the base layer 101a. As a result, as illustrated in Fig. 11D, the hot melt adhesive layer 101b separated from the releasing treatment surface 104a and transferred onto the surface of the base layer 101a remains on the base layer 101a side. As a result, the print-receiving tape 100 having a three-layer structure (similar to the above described first embodiment) is obtained in which the hot melt adhesive layer 101b, the base layer 101a, and the transfer-receiving layer 101c are laminated adjacently in this order from the one side (lower side in Figs. 11A to 11D) in the thickness direction to the other side (upper side in Figs. 11A to 11D) in the thickness direction. At that time, since the surface of the hot melt adhesive layer 101b remaining on the base layer 101a is separated from the releasing treatment surface 104a of the base layer 101a, it becomes an extremely smooth surface.

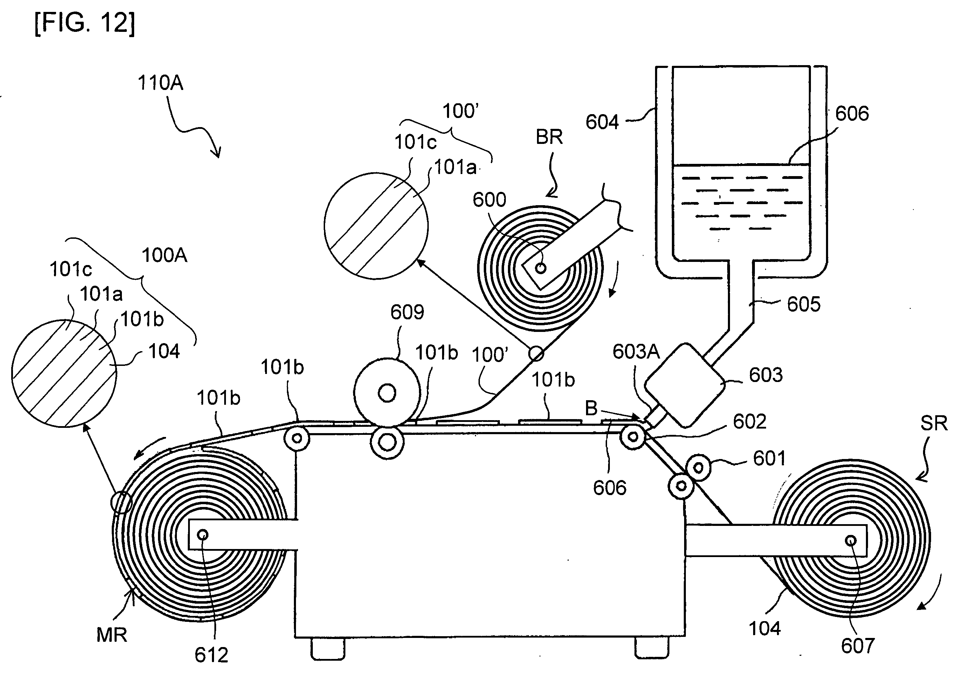

Details for realizing creation of the print-receiving tape 100 by the above described method will be described by referring to Figs. 12 to 15. In the present embodiment, a former stage and a latter stage, that is, two roll manufacturing devices 110A and 110B are used.

### <Roll manufacturing device (former stage)>

First, a configuration example of the roll manufacturing device 110A (corresponding to an example of the processor) for executing processing on the former stage is illustrated in Fig. 12.

In the roll manufacturing device 110A illustrated in Fig. 12, a separation material roll SR1 (it should be a spiral state but illustrated as a concentric circle for simplification) around which the separation material 104 is wound is rotatably supported by a pivot shaft 607. The separation material 104 fed out of the separation material roll SR1 is fed to the feeding roller 602 through the supply roller pair 601. When the separation material 104 passes through the feeding roller 602, the liquid-state hot melt adhesive 606 is discharged from a discharge nozzle 603A' of the first fixed-amount discharging device 603 provided with the discharge nozzle 603A' (details will be described later) unlike that of the above described first embodiment. This discharged hot melt adhesive 606 is applied on the upper side of the separation material 104, the hot melt adhesive layer 101b is sequentially formed on the upper side (corresponding to the other side in the thickness direction) of the separation material 104. As the hot melt adhesive 606 at this time, for example, similar to the above described first embodiment, an adhesive having a melting viscosity of 10000 mPa·S or less when the above described melting point is 150°C is used.

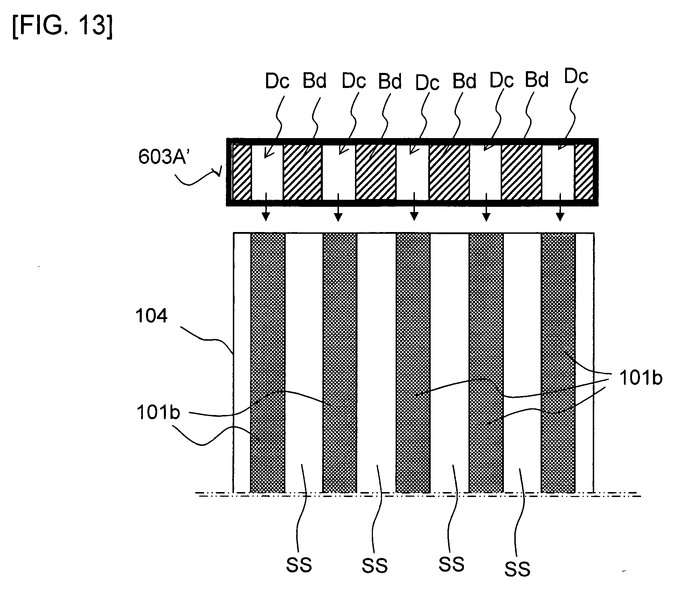

Fig. 13 illustrates the above described discharge nozzle 603A'. In the discharge nozzle 603A', five discharge ducts Dc in this example are aligned in a width direction of the separation material 104. The adjacent discharge ducts Dc are partitioned by a partition portion Bd. As described above, when the separation material 104 passes through the feeding roller 602, the hot melt adhesive 606 discharged from each of the ducts Dc of the discharge nozzle 603A' is applied on the separation material 104, respectively. As a result, on the separation material 104, five rows (in this example) of the hot melt adhesive layers 101b (corresponding to a hot melt application portion) are sequentially formed in a line shape, respectively, as illustrated in Fig. 13. As described above, each of the hot melt adhesive layers 101b is arranged away from each other in the width direction of the separation material 104, and each is extended in the longitudinal direction of the separation material 104. Moreover, in the separation material 104, a space portion SS without hot melt is present in a portion corresponding to the above described partition portion Bd (that is, between the two hot melt adhesive layers 101b and 101b adjacent in the width direction).

Returning to Fig. 12, above described the feeding path of the separation material 104, a tape base material roll BR around which the material tape 100' is wound is rotatably supported by the pivot shaft 600 similarly to the above described first embodiment. The material tape 100' is, similarly to the above described first embodiment, provided with the base layer 101a and the transfer-receiving layer 101c provided adjacently on the other side in the above described thickness direction of this base layer 101a. The material tape 100' fed out of the tape base material roll BR is bonded on the separation material layer 104 fed as described above so as to sandwich the above described hot melt adhesive layer 101b (by a bonding mechanism such as a bonding roller or the like, not shown). As a result, the intermediate tape 100A provided with the above described separation material 104, the hot melt adhesive layer 101b, the above described base layer 101a, and the above described transfer-receiving layer 101c from the one side to the other side in the thickness direction is formed. In the portion where the above described space portion SS is present, since the hot melt adhesive layer 101b in the above described four-layer laminated structure is not present, the separation material 104 and the base layer 101a are laminated with each other in the thickness direction through the space portion without hot melt.

The intermediate tape 100A (corresponding to an example of the bookbinding sheet in the present embodiment) formed so as to encompass the hot melt adhesive layer 101 b as described above is fed in a substantially horizontal direction, its unnecessary parts on the both end portions in the width direction are cut and removed by the unnecessary-part removing device 609 and then, taken up by being wound around an outer periphery of an appropriate winding member (not shown) using a take-up shaft 612 as an axis, and an intermediate tape roll MR (corresponding to a bookbinding sheet roll in the present embodiment) is created.

### <Roll manufacturing device (latter stage)>

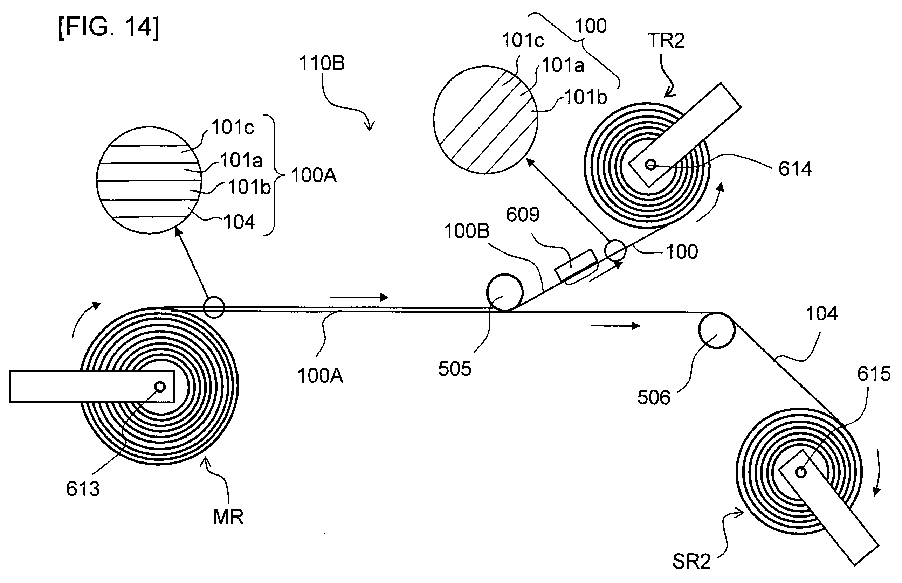

Subsequently, a configuration example of the roll manufacturing device 110B (corresponding to an example of the processor) for executing processing on the latter stage using the above described intermediate tape roll MR is illustrated in Fig. 14. In this roll manufacturing device 110B, the above described intermediate tape roll MR (it should be a spiral state but illustrated as a concentric circle for simplification) around which the above described intermediate tape 100A is wound is rotatably supported by a pivot shaft 613. The intermediate tape 100A has a four-layer structure in which the separation material 104, the hot melt adhesive layer 101b, the above described base layer 101a, and the above described transfer-receiving layer 101c are provided from the one side (lower side in the figure) to the other side (upper side in the figure) in the thickness direction as described above. The intermediate tape 100A fed out of the intermediate tape roll MR is sent to a first roller 505.

At the first roller 505, in the above described four-layer structure included in the intermediate tape 100A, the separation material 104 is peeled off the other three layers (the hot melt adhesive layer 101b, the above described base layer 101a, and the above described transfer-receiving layer 101c). The peeled-off separation material 104 is taken up by a separation paper roll SR2 rotatably supported by a take-up shaft 615 through a second roller 506.

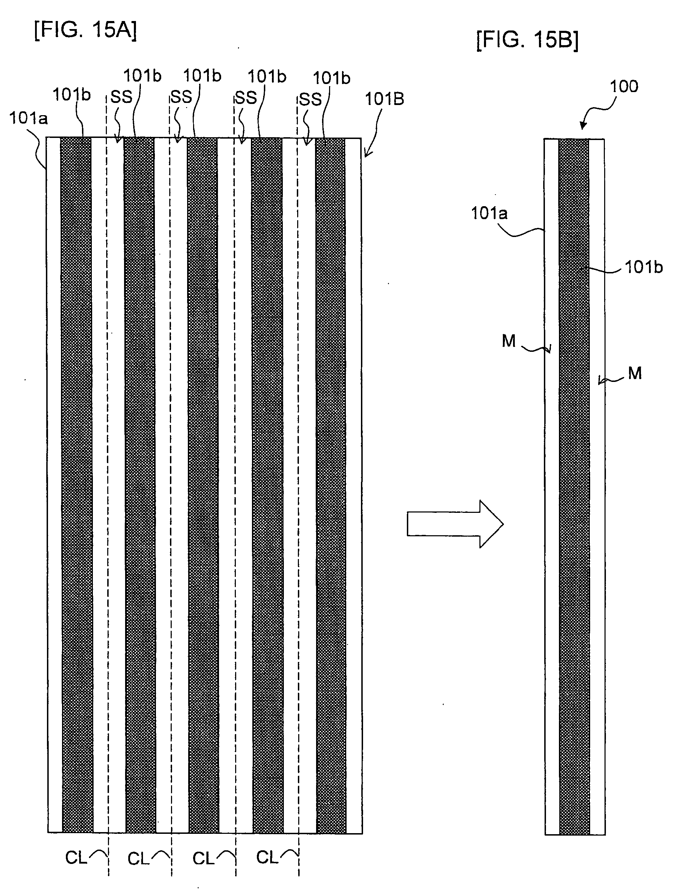

On the other hand, the above described other three layers after the above described separation material 104 is peeled off (hereinafter referred to as "three-layer laminated tape 100B" as appropriate) are introduced into a slitter device 609. The slitter device 609 is provided with four cutting blades (not shown) in this example. The above described three-layer laminated tape 100B is cut by the above described four cutting blades on a cutting line CL indicated by a broken line in Fig. 15A while passing through the above described slitter device 609. That is, the three-layer laminated tape 100B is cut in the tape longitudinal direction in the middle of the two adjacent hot melt adhesive layers 101b and 101b in the hot melt adhesive layers 101b formed in five rows as described above. As a result, as illustrated in Fig. 15B, five print-receiving tapes 100 (corresponding to bookbinding sheets newly obtained in the present embodiment), each having an elongated shape with a small width and having lug portions M and M (corresponding to the exposed portions) where there is no hot melt application portion on the both sides in the width direction of the hot melt adhesive layer 101b and the base layers 101a are exposed are obtained. These five print-receiving tapes 100 are taken up as a tape roll TR2 for print rotatably supported by a take-up shaft 614, respectively.

The tape roll TR2 for print created as above is used in the printing device 1 similarly to the tape roll TR1 for print in the above described first embodiment, a print is formed on the print-receiving tape 100 fed out of the tape roll TR2 for print, and the tape is cut to produce the spine sheet L. Moreover, by using the above described spine sheet L, bookbinding is performed by the bookbinding device 120 similar to that of the above described first embodiment.

As described above, in the present embodiment, the hot melt adhesive layer 101b applied in an irregular shape as described above is pressed onto the separation material 104, and the intermediate tape 100A is created. That is, in this intermediate tape 100A, on the surface of the other side (upper side in Figs. 11A to 11D) in the thickness direction of the separation material 104, the releasing treatment surface 104a attached separably to the surface of the one side (lower side in Figs. 11A to 11D) in the thickness direction of the hot melt adhesive layer 101b is provided. Since a surface of the hot melt adhesive layer 101b of the print-receiving tape 100 obtained by peeling off the separation material 104 from the intermediate tape 100A is separated from the releasing treatment surface 104a of the base layer 101a, the surface is an extremely smooth surface.

As a result, unlike the structure in which the hot melt is simply applied with low accuracy on the base layer 101a (hereinafter referred to as a simple application structure), in the present embodiment, the hot melt adhesive layer 101b having a smooth surface can be easily formed on the base layer 101a. Therefore, similarly to the above described first embodiment, when the tape including the hot melt adhesive layer 101b and the base layer 101a (the intermediate tape 100A, the three-layer laminated tape 100B or the print-receiving tape 100) is fed in the roll manufacturing device 110A or 110B or the printing device 1, as compared with the above described simple application structure in which the surface of the hot melt adhesive layer 101b is irregular, the tape can be fed easily and smoothly. Moreover, when print formation is to be performed on the transfer-receiving layer 101c of the print-receiving tape 100 (that is, on the side opposite to the hot melt adhesive layer 101b of the base layer 101a) in the printing device 1, a favorable quality print can be formed without blur or the like caused by irregularity.

Moreover, particularly in the present embodiment, the print-receiving tape 100 has the lug portions M and M (corresponding to the exposed portions) where base layers 101a are exposed, respectively, on the both sides in the width direction of the hot melt adhesive layer 101b (where the hot melt is not applied). As a result, when a spine is to be formed during the bookbinding by bending the spine sheet L created by using the print-receiving tape 100 in the width direction into the shape having a U-shaped cross section (See the above described Figs. 6 to 9), the U-shaped both end portions become a non-application portion of the above described hot melt. As a result, protrusion of the extra hot melt from the both end portions during the bookbinding can be reliably prevented. Such configuration in which the non-application portion of the hot melt (exposed portion where the base layer is exposed) is provided on the both end portions may be applied for producing the print-receiving tape 100 in the first embodiment. In this case too, the advantage that protrusion of the hot melt can be prevented is obtained similarly to the above.

Other than those described above, methods of the embodiments and each of the variations may be used in appropriate combinations.

Though not particularly exemplified, the present invention is put into practice with various changes applied within a range not departing from its gist.

Reference Signs list

## Claims

1. A bookbinding tape cassette (70) comprising:
a bookbinding tape roll (TR1) that winds a bookbinding tape (100) having a dimension in a thickness direction around an outer periphery of a winding member (18) provided with a predetermined axis (K), the bookbinding tape (100) including a base layer (101a) and a hot melt adhesive layer (101b) that is provided on one side from said base layer (101a) in said thickness direction, the hot melt adhesive layer (101b) being formed of a hot melt adhesive applied so that a surface of the hot melt adhesive layer (101b) on the one side in said thickness direction becomes smooth, the hot melt adhesive being configured to melt at a temperature of a predetermined melting point or more so as to exert adhesiveness;
a guide shaft (32) for guiding said bookbinding tape (100) fed out of said bookbinding tape roll (TR1); and
a housing (70a) configured to accommodate said bookbinding tape roll (TR1) and said guide shaft (32) therein,
**characterized in that**
said bookbinding tape (100) fed out of said bookbinding tape roll (TR1) is able to be continuously supplied to an outside of said housing (70a); said bookbinding tape cassette (70) further comprises:
a ribbon supply roll (IR1) provided inside said housing (70a) and configured to feed out an ink ribbon (26) to be overlapped with said bookbinding tape (100) for thermal transfer of ink to the bookbinding tape (100); and
a ribbon take-up roll (IR2) provided inside said housing (70a) and configured to take up used ink ribbon (26) after print formation;
said bookbinding tape (100) has a transfer-receiving layer (101c) provided adjacently on the other side of said base layer (101a) in said thickness direction and formed of a transfer-receiving material capable of print formation by said thermal transfer from said ink ribbon (26).

2. The bookbinding tape cassette (70) according to claim 1, wherein:
said bookbinding tape (100) has:
said base layer (101a) formed of a paper material, an olefin based resin or a vinyl based resin; and
said hot melt adhesive layer (101b) smoothly applied on said base layer (101a) or on an apply-receiving material layer (101d) provided adjacently on the one side of said base layer (101a) in said thickness direction.

3. The bookbinding tape cassette (70) according to claim 2, wherein:
a three-layer laminated structure is provided, the three-layer laminated structure including:
said base layer (101a) formed of said paper material;
said hot melt adhesive layer (101b) smoothly applied on the one side of said base layer (101a) in said thickness direction; and
said transfer-receiving layer (101c) adjacently provided on the other side of said base layer (101a) in said thickness direction.

4. The bookbinding tape cassette (70) according to any one of claims 1 to 3, wherein:
said bookbinding tape (100) has an exposed portion (M) where said hot melt adhesive layer (101b) is not provided and said base layer (101a) is exposed, on both end portions in a width direction.

5. The bookbinding tape cassette (70) according to any one of claims 1 to 4, wherein:
said hot melt adhesive layer (101b) of said bookbinding tape (100) has melting viscosity of 10000 mPa·S or less when said melting point is 150°C; and
the melting point of said ink ribbon (26) during the thermal transfer is 160°C or more and 200°C or less.

6. The bookbinding tape cassette (70) according to any one of claims 1 to 5, wherein:
a dimension in said thickness direction of said hot melt adhesive layer (01b) of said bookbinding tape (100) is 200 µm or more and 400 µm or less.

7. The bookbinding tape cassette (70) according to any one of claims 1 to 6, wherein:
distribution of surface roughness of said hot melt adhesive layer (101b) of said bookbinding tape (100) is within ±16%.

8. The bookbinding tape cassette (70) according to any one of claims 1 to 7, wherein:
a thickness of said hot melt adhesive layer (101b) of said bookbinding tape (100) is larger than a thickness of said base layer (101a).

9. A bookbinding tape (100) for dispensing from the tap cassete of any previous claim, having a dimension in a thickness direction, comprising:
a base layer (101a); and
a hot melt adhesive layer (101b) that is provided on one side from said base layer (101a) in said thickness direction, the hot melt adhesive layer (101b) being applied smoothly on said base layer (101a) or an apply-receiving material layer (101d) provided adjacently on the one side of said base layer (101a) in said thickness direction and being configured to melt at a temperature of a predetermined melting point or more so as to exert adhesiveness,
**characterized by**
a print-receiving area (101c) provided adjacently on the other side of said base layer (101a) in said thickness direction and capable of print formation by thermal transfer from an ink ribbon (26).

10. The bookbinding tape (100) according to claim 9, wherein:
a three-layer laminated structure is provided, the three-layer laminated structure including:
said base layer (101a) formed of a paper material;
said hot melt adhesive layer (101b) smoothly applied on the one side of said base layer (101a) in said thickness direction; and
said print-receiving area (101c) adjacently provided on the other side of said base layer (101a) in said thickness direction.

11. The bookbinding tape (100) according to claim 9, wherein:
a four-layer laminated structure is provided, the four-layer laminated structure including:
said base layer (101a) formed of an olefin based resin;
said apply-receiving material layer (101d) provided on the one side of said base layer (101a) in said thickness direction and formed of a paper material;
said hot melt adhesive layer (101b) smoothly applied on the one side of said apply-receiving material layer (101d) in said thickness direction; and
said print-receiving area (101c) adjacently provided on the other side of said base layer (101a) in said thickness direction.

12. The bookbinding tape (100) according to claim 9, wherein:
a four-layer laminated structure is provided, the four-layer laminated structure including:
said base layer (101a) formed of a vinyl based resin;
said apply-receiving material layer (101d) provided on the one side of said base layer (101a) in said thickness direction and formed of a paper material;
said hot melt adhesive layer (101b) smoothly applied on the one side of said apply-receiving material layer (101d) in said thickness direction; and
said print-receiving area (101c) adjacently provided on the other side of said base layer (101a) in said thickness direction.

13. The bookbinding tape (100) according to any one of claims 10 to 12, wherein:
said hot melt adhesive layer (101b) has melting viscosity of 10000 mPa·S or less when said melting point is 150°C; and
the melting point of said ink ribbon (26) during the thermal transfer is higher than 150°C and 200°C or less.

14. The bookbinding tape (100) according to any one of claims 9 to 13, wherein:
a dimension in said thickness direction of said hot melt adhesive layer (101b) is 100 µm or more and 500 µm or less.

## Patentansprüche

1. Buchbinderbandkassette (70) mit:
einer Buchbinderbandrolle (TR1), die ein
Buchbinderband (100) mit einem Maß in einer Dickenrichtung um einen Außenumfang eines Wicklungselements (18) aufwickelt, das mit einer vorbestimmten Achse (K) versehen ist, wobei das Buchbinderband (100) eine Basisschicht (101a) und eine Schmelzklebeschicht (101b) aufweist, die an einer Seite von der Basisschicht (101a) in der Dickenrichtung vorgesehen ist, wobei die Schmelzklebeschicht (101b) aus einem Schmelzklebemittel ausgebildet ist, das so aufgebracht ist, dass eine Fläche der Schmelzklebeschicht (101b) an der einen Seite in der Dickenrichtung glatt wird, wobei das Schmelzklebemittel so konfiguriert ist, dass es bei einer Temperatur eines vorbestimmten Schmelzpunkts oder mehr schmilzt, um so eine Klebung zu bewirken;
einer Führungswelle (32) zum Führen des
Buchbinderbands (100), das von der Buchbinderbandrolle (TR1) gefördert wird; und
einem Gehäuse (70a), das dazu konfiguriert ist, die Buchbinderbandrolle (TR1) und die Führungswelle (32) darin aufzunehmen,
**dadurch gekennzeichnet, dass**
das Buchbinderband (100), das aus der Buchbinderbandrolle (TR1) gefördert wird, zu einer Außenseite des Gehäuses (70a) kontinuierlich zugeführt werden kann, wobei die Buchbinderbandkassette (70) des Weiteren Folgendes aufweist:
eine Tintenbandzuführungsrolle (IR1), die im Inneren des Gehäuses (70a) vorgesehen und dazu konfiguriert ist, ein Tintenband (26) so herauszufördern, dass es sich mit dem Buchbinderband (100) für einen thermischen Transfer von Tinte zu dem Buchbinderband (100) überlappt; und
eine Tintenbandaufnahmerolle (IR2), die im Inneren des Gehäuses (70a) vorgesehen und dazu konfiguriert ist, das verbrauchte Tintenband (26) nach der Erzeugung eines Drucks aufzunehmen;
wobei das Buchbinderband (100) eine Transferaufnahmeschicht (101c) hat, die angrenzend an der anderen Seite der Basisschicht (101a) in der Dickenrichtung vorgesehen und aus einem Transferaufnahmematerial ausgebildet ist, das durch den thermischen Transfer von dem Tintenband (26) einen Druck erzeugen kann.

2. Buchbinderbandkassette (70) gemäß Anspruch 1, wobei:
das Buchbinderband (100) Folgendes aufweist:
die Basisschicht (101a), die aus einem Papiermaterial, einem Kunststoff auf Olefinbasis oder einem Kunststoff auf Vinylbasis ausgebildet ist; und
die Schmelzklebeschicht (101b), die an der
Basisschicht (101a) oder an einer Aufbringungsmaterialaufnahmeschicht (101d) glatt aufgebracht ist, die angrenzend an der einen Seite der Basisschicht (101a) in der Dickenrichtung vorgesehen ist.

3. Buchbinderbandkassette (70) gemäß Anspruch 2, wobei:
eine dreilagig laminierte Struktur vorgesehen ist, wobei die dreilagig laminierte Struktur Folgendes aufweist:
die Basisschicht (101a), die aus dem Papiermaterial ausgebildet ist;
die Schmelzklebeschicht (101b), die an der einen Seite der Basisschicht (101a) in der Dickenrichtung aufgebracht ist; und
die Transferaufnahmeschicht (101c), die angrenzend an der anderen Seite der Basisschicht (101a) in der Dickenrichtung vorgesehen ist.

4. Buchbinderbandkassette (70) gemäß einem der Ansprüche 1 bis 3, wobei:
das Buchbinderband (100) an beiden Endabschnitten in einer Breitenrichtung einen freigelegten Abschnitt (M) aufweist, in dem die Schmelzklebeschicht (101b) nicht vorgesehen ist und die Basisschicht (101a) freiliegt.

5. Buchbinderbandkassette (70) gemäß einem der Ansprüche 1 bis 4, wobei:
die Schmelzklebeschicht (101b) des Buchbinderbands (100) eine Schmelzviskosität von 10000 mPa·S oder weniger hat, wenn der Schmelzpunkt 150°C beträgt; und
der Schmelzpunkt des Tintenbands (26) während des thermischen Transfers 160°C oder größer und 200°C oder kleiner ist.

6. Buchbinderbandkassette (70) gemäß einem der Ansprüche 1 bis 5, wobei:
ein Maß in der Dickenrichtung der Schmelzklebeschicht (101b) des Buchbinderbands (100) 200 µm oder größer und 400 µm oder kleiner ist.

7. Buchbinderbandkassette (70) gemäß einem der Ansprüche 1 bis 6, wobei:
eine Verteilung einer Oberflächenrauigkeit der Schmelzklebeschicht (101b) des Buchbinderbands (100) innerhalb ±16% liegt.

8. Buchbinderbandkassette (70) gemäß einem der Ansprüche 1 bis 7, wobei:
eine Dicke der Schmelzklebeschicht (101b) des Buchbinderbands (100) größer ist als eine Dicke der Basisschicht (101a).

9. Buchbinderband (100), das von einer Bandkassette gemäß einem der vorherigen Ansprüche auszugeben ist und ein Maß in einer Dickenrichtung hat, mit:
einer Basisschicht (101a); und
einer Schmelzklebeschicht (101b), die an einer Seite von der Basisschicht (101a) in der Dickenrichtung vorgesehen ist, wobei die Schmelzklebeschicht (101b) glatt auf der Basisschicht (101a) oder auf einer Aufbringungsmaterialaufnahmeschicht (101d) aufgebracht ist, die angrenzend an der einen Seite der Basisschicht (101a) in der Dickenrichtung vorgesehen ist, und die dazu konfiguriert ist, bei einer Temperatur eines vorbestimmten Schmelzpunkts oder mehr zu schmelzen, um so eine Klebung zu bewirken,
**gekennzeichnet durch**
eine Druckaufnahmefläche (101c), die angrenzend an der anderen Seite der Basisschicht (101a) in der Dickenrichtung vorgesehen ist und **durch** thermischen Transfer von einem Tintenband (26) einen Druck erzeugen kann.

10. Buchbinderband (100) gemäß Anspruch 9, wobei:
eine dreilagig laminierte Struktur vorgesehen ist, wobei die dreilagig laminierte Struktur Folgendes aufweist:
die Basisschicht (101a), die aus einem Papiermaterial ausgebildet ist;
die Schmelzklebeschicht (1013b), die glatt an der einen Seite der Basisschicht (101a) in der Dickenrichtung aufgebracht ist; und
die Druckaufnahmefläche (101c), die angrenzend an der anderen Seite der Basisschicht (101a) in der Dickenrichtung vorgesehen ist.

11. Buchbinderband (100) gemäß Anspruch 9, wobei:
eine vierlagig laminierte Struktur vorgesehen ist, wobei die vierlagig laminierte Struktur Folgendes aufweist:
die Basisschicht (101a), die aus einem Kunststoff auf Olefinbasis ausgebildet ist;
die Aufbringungsmaterialaufnahmeschicht (101d), die an der einen Seite der Basisschicht (101a) in der Dickenrichtung vorgesehen und aus einem Papiermaterial ausgebildet ist;
die Schmelzklebeschicht (101b), die glatt an der einen Seite der Aufbringungsmaterialaufnahmeschicht (101d) in der Dickenrichtung aufgebracht ist; und
die Druckaufnahmefläche (101c), die angrenzend an der anderen Seite der Basisschicht (101a) in der Dickenrichtung vorgesehen ist.

12. Buchbinderband (100) gemäß Anspruch 9, wobei:
eine vierlagig laminierte Struktur vorgesehen ist, wobei die vierlagig laminierte Struktur Folgendes aufweist:
die Basisschicht (101a), die aus einem Kunststoff auf Vinylbasis ausgebildet ist;
die Aufbringungsmaterialaufnahmeschicht (101d), die an der einen Seite der Basisschicht (101a) in der Dickenrichtung vorgesehen und aus einem Papiermaterial ausgebildet ist;
die Schmelzklebeschicht (101b), die glatt an der einen Seite der Aufbringungsmaterialaufnahmeschicht (101d) in der Dickenrichtung aufgebracht ist; und
die Druckaufnahmefläche (101c), die angrenzend an der anderen Seite der Basisschicht (101a) in der Dickenrichtung vorgesehen ist.

13. Buchbinderband (100) gemäß einem der Ansprüche 10 bis 12, wobei:
die Schmelzklebeschicht (101b) eine Schmelzviskosität von 10000 mPa·S oder weniger hat, wenn der Schmelzpunkt 150°C beträgt; und
der Schmelzpunkt des Tintenbands (26) während des thermischen Transfers größer als 150°C und 200°C oder kleiner ist.

14. Buchbinderband (100) gemäß einem der Ansprüche 9 bis 13, wobei:
ein Maß in der Dickenrichtung der Schmelzklebeschicht (101b) 100 µm oder größer und 500 µm oder kleiner ist.

## Revendications

1. Cassette à bande de reliure (70) comprenant :
un rouleau de bande de reliure (TR1) sur lequel est enroulée une bande de reliure (100) présentant une certaine dimension dans le sens de l'épaisseur autour d'une périphérie externe d'un élément d'enroulement (18) comportant un axe prédéterminé (K), la bande de reliure (100) comportant une couche de base (101a) et une couche adhésive thermofusible (101b) qui est formée sur une première face à partir de ladite couche de base (101a) dans ledit sens de l'épaisseur, la couche adhésive thermofusible (101b) étant formée d'un adhésif thermofusible appliqué de telle sorte qu'une surface de la couche adhésive thermofusible (101b) sur la première face dans ledit sens de l'épaisseur devient lisse, l'adhésif thermofusible étant configuré de manière à fondre à une température supérieure ou égale à un point de fusion prédéterminé afin d'exercer son adhésivité ;
un arbre de guidage (32) destiné à guider ladite bande de reliure (100) délivrée à partir dudit rouleau de bande de reliure (TR1) ; et
un boîtier (70a) configuré de manière à recevoir ledit rouleau de bande de reliure (TR1) et ledit arbre de guidage (32) à l'intérieur, **caractérisée en ce que**
ladite de bande de reliure (100) délivrée à partir dudit rouleau de bande de reliure (TR1) peut être fournie de manière continue à l'extérieur dudit boîtier (70a) ; ladite cassette à bande de reliure (70) comprenant en outre :
un rouleau d'alimentation de ruban (IR1) agencé à l'intérieur dudit boîtier (70a) et configuré de manière à délivrer un ruban d'encre (26) destiné à être recouvert par ladite bande de reliure (100) afin d'assurer un transfert thermique d'encre vers la bande de reliure (100) ; et
un rouleau d'enroulement de ruban (IR2) agencé à l'intérieur dudit boîtier (70a) et configuré de manière à récupérer ledit ruban d'encre usagé (26) après formation d'une impression ;
ladite bande de reliure (100) comporte une couche de réception de transfert (101c) agencée de manière adjacente sur l'autre face de ladite couche de base (101a) dans ledit sens de l'épaisseur et formée en un matériau de réception de transfert permettant d'assurer la formation de l'impression par ledit transfert thermique à partir dudit ruban d'encre (26).

2. Cassette à bande de reliure (70) selon la revendication 1, dans laquelle :
ladite bande de reliure (100) comporte :
ladite couche de base (101a) formée en un matériau à base de papier, une résine à base d'oléfine ou une résine à base de vinyle ; et
ladite couche adhésive thermofusible (101b) appliquée régulièrement sur ladite couche de base (101a) ou sur une couche de matériau de réception d'application (101d) formée de manière adjacente sur la première face de ladite couche de base (101a) dans ledit sens de l'épaisseur.

3. Cassette à bande de reliure (70) selon la revendication 2, dans laquelle :
une structure stratifiée à trois couches est formée, la structure stratifiée à trois couches comportant :
ladite couche de base (101a) formée à partir dudit matériau à base de papier ;
ladite couche adhésive thermofusible (101b) appliquée régulièrement sur la première face de ladite couche de base (101a) dans ledit sens de l'épaisseur ; et
ladite couche de réception de transfert (101c) formée de manière adjacente sur l'autre face de ladite couche de base (101a) dans ledit sens de l'épaisseur.

4. Cassette à bande de reliure (70) selon l'une quelconque des revendications 1 à 3, dans laquelle :
ladite bande de reliure (100) comporte une partie exposée (M) sur laquelle ladite couche adhésive thermofusible (101b) n'est pas formée et ladite couche de base (101a) est exposée, sur les deux parties d'extrémité dans la direction transversale.

5. Cassette à bande de reliure (70) selon l'une quelconque des revendications 1 à 4, dans laquelle :
ladite couche adhésive thermofusible (101b) de ladite bande de reliure (100) présente une viscosité de fusion inférieure ou égale à 10000 mPa.S lorsque ledit point de fusion est de 150°C ; et
le point de fusion dudit ruban d'encre (26) au cours du transfert thermique est supérieur ou égal à 160 °C et inférieur ou égal à 200°C.

6. Cassette à bande de reliure (70) selon l'une quelconque des revendications 1 à 5, dans laquelle :
une dimension dans ledit sens de l'épaisseur de ladite couche adhésive thermofusible (101b) de ladite bande de reliure (100) est supérieure ou égale à 200 µm et inférieure ou égale à 400 µm.

7. Cassette à bande de reliure (70) selon l'une quelconque des revendications 1 à 6, dans laquelle :
la distribution de la rugosité de surface de la ladite couche adhésive thermofusible (101b) de ladite bande de reliure (100) est dans une plage de ± 16%.

8. Cassette à bande de reliure (70) selon l'une quelconque des revendications 1 à 7, dans laquelle :
une épaisseur de ladite couche adhésive thermofusible (101b) de ladite bande de reliure (100) est supérieure à l'épaisseur de ladite couche de base (101a).

9. Bande de reliure (100) destinée à être distribuée à partir de la cassette à bande selon l'une quelconque des revendications précédentes présentant une certaine dimension dans le sens de l'épaisseur, comprenant :
une couche de base (101a) ; et
une couche adhésive thermofusible (101b) qui est formée sur une première face de ladite couche de base (101a) dans ledit sens de l'épaisseur, la couche adhésive thermofusible (101b) étant appliquée régulièrement sur ladite couche de base (101a) ou une couche de matériau de réception d'application (101d) formée de manière adjacente sur la première face de ladite couche de base (101a) dans ledit sens de l'épaisseur et qui est configurée de manière à fondre à une température supérieure ou égale à un point de fusion prédéterminé de manière à exercer son adhésivité,
**caractérisée par**
une zone de réception d'impression (101c) agencée de manière adjacente sur l'autre face de ladite couche de base (101a) dans ledit sens de l'épaisseur et permettant d'assurer la formation de l'impression par transfert thermique à partir d'un ruban d'encre (26).

10. Bande de reliure (100) selon la revendication 9, dans laquelle :
une structure stratifiée à trois couches est formée, la structure stratifiée à trois couches comprenant :
ladite couche de base (101a) formée en un matériau à base de papier ;
ladite couche adhésive thermofusible (101b) appliquée régulièrement sur la première face de ladite couche de base (101a) dans ledit sens de l'épaisseur ; et
ladite zone de réception d'impression (101c) agencée de manière adjacente sur l'autre face de ladite couche de base (101a) dans ledit sens de l'épaisseur.

11. Bande de reliure (100) selon la revendication 9, dans laquelle :
une structure stratifiée à quatre couches est formée, la structure stratifiée à quatre couches comportant :
ladite couche de base (101a) formée en une résine à base d'oléfine ;
ladite couche de matériau de réception d'application (101d) agencée sur la première face de ladite couche de base (101a) dans ledit sens de l'épaisseur et formée en un matériau à base de papier ;
ladite couche adhésive thermofusible (101b) appliquée régulièrement sur la première face de ladite couche de matériau de réception d'application (101d) dans ledit sens de l'épaisseur ; et
ladite zone de réception d'impression (101c) agencée de manière adjacente sur l'autre face de ladite couche de base (101a) dans ledit sens de l'épaisseur.

12. Bande de reliure (100) selon la revendication 9, dans laquelle :
une structure stratifiée à quatre couches est formée, la structure stratifiée à quatre couches comportant :
ladite couche de base (101a) formée en une résine à base de vinyle ;
ladite couche de matériau de réception d'application (101d) agencée sur la première face de ladite couche de base (101a) dans ledit sens de l'épaisseur et formée en un matériau à base de papier ;
ladite couche adhésive thermofusible (101b) appliquée régulièrement sur la première face de ladite couche de matériau de réception d'application (101d) dans ledit sens de l'épaisseur ; et
ladite zone de réception d'impression (101c) formée de manière adjacente sur l'autre face de ladite couche de base (101a) dans ledit sens de l'épaisseur.

13. Bande de reliure (100) selon l'une quelconque des revendications 10 à 12, dans laquelle :
ladite couche adhésive thermofusible (101b) présente une viscosité de fusion inférieure ou égale à 10000 mPa.S lorsque ledit point de fusion est de 150°C ; et
le point de fusion dudit ruban d'encre (26) au cours du transfert thermique est supérieur à 150°C et inférieur ou égal à 200°C.

14. Bande de reliure (100) selon l'une quelconque des revendications 9 à 13, dans laquelle :
une dimension dans ledit sens de l'épaisseur de ladite couche adhésive thermofusible (101b) est supérieure ou égale à 100 µm et inférieure ou égale à 500 µm.
